# EUROPÄISCHE PATENTANMELDUNG

(11) **EP 0 757 083 A2**
(43) Veröffentlichungstag der Anmeldung: **05.02.1997**
(21) Anmeldenummer: 96810486.9
(22) Anmeldetag: 24.07.1996
(51) Int. Cl.: C09B 44/20, D21H 21/28

(54) **Kationische Thiazolazu- und Benzthiazolazofarbstoffe**

(30) Priorität: 02.08.1995 CH 2250/95
(71) Anmelder: Ciba SC Holding AG, 4057 Basel (CH)
(72) Erfinder: Käser, Adolf, Dr., 4103 Bottmingen (CH)

(57) **Zusammenfassung**

Die kationischen Benzthiazolazofarbstoffe der im Anspruch 1 angegebenen Formeln (1) und (2) eignen sich insbesondere zum Färben von Papier.

Papier wird mit diesen Farbstoffen in blauen oder violetten Farbtönen mit guten Echtheiten gefärbt.

## Beschreibung

Die vorliegende Erfindung betrifft neue kationische von Sulfonsäuregruppen freie Azofarbstoffe, Verfahren zu deren Herstellung sowie deren Verwendung zum Färben von Textilmaterialien und insbesondere von Papier.

Die neuen Azofarbstoffe entsprechen der Formel 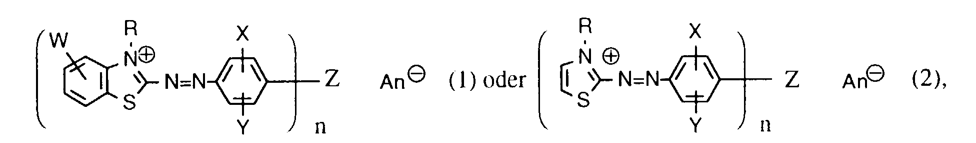 worin
- W: Halogen, Alkyl, Alkoxy, Carboxy, Alkanoylamino, Arylamino, Arylcarbonylamino, Ureido, Alkylureido oder Arylureido,
- R: Alkyl,
- X: Wasserstoff, Alkyl oder Alkoxy,
- Y: Wasserstoff, Alkyl, Alkoxy, Alkanoylamino, Arylcarbonylamino oder Arylureido,
- n: 2, 3 oder 4,
- An^{⊖}: ein farbloses Anion und
- Z: den Rest eines aliphatischen Di-, Tri- oder Tetraamins der Formel 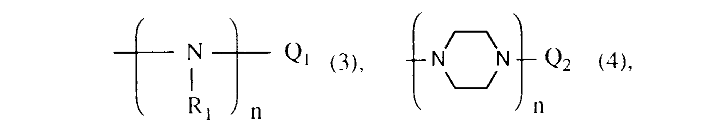 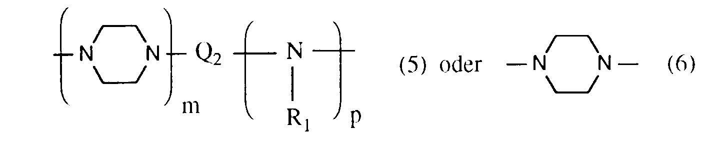
bedeutet wobei
m und p unabhängig voneinander je 1 oder 2,
R₁ ggf. substituiertes Alkyl oder Phenyl,
Q₁ Alkyl oder Alkylen, das ein- oder mehrmals durch O, S, N-R₁, NR₁-CO, CO-NR₁-CO, CO, SO₂, -CH=CH-, O-CO, Aryl oder durch einen heterocyclischen Ring mit 1 oder 2 Heteroatomen unterbrochen sein kann, und
Q₂ Alkyl oder Alkylen, das ein- oder mehrmals durch 0, S, N-R₁, NR₁-CO, CO-NR₁-CO, CO, SO₂, -CH=CH-, O-CO, Aryl oder durch einen heterocyclischen Ring unterbrochen sein kann. oder ein Brückenglied der Formel CO, CO-Alkylen-CO, CO-Arylen-CO, CO-NH-Alkylen-NH-CO, CO-NH-Arylen-NH-CO, 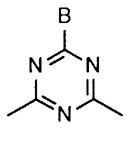 oder 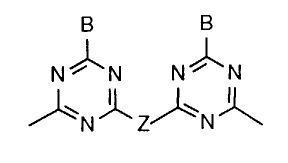 bedeutet, wobei B Halogen, gegebenenfalls substituiertes Amino, Hydroxy, Mercapto oder Phenyl ist.

Unter Alkylresten sind erfindungsgemäss generell geradkettige, verzweigte oder cyclische Alkylgruppen zu verstehen. Cycloalkyl weist vorzugsweise 5 bis 8 C-Atome, offenkettiges Alkyl vorzugsweise 1 bis X, insbesondere 1 bis 4 C-Atome auf.

Als unverzweigtes oder verzweigtes offenkettiges Alkyl kommen z.B. in Frage: Methyl, Ethyl, n- und iso-Propyl, n-, sec.- oder tert.Butyl, n- und iso-Pentyl, n- und iso-Hexyl oder 2-Ethylhexyl.

Diese Alkylreste können ein- oder mehrmals substituiert sein, beispielsweise durch Hydroxy, Carboxy, Halogen, Cyan, C₁-C₄-Alkoxy, durch C₁-C₄-Alkoxy, das durch Hydroxy substituiert ist, durch Amino, Alkylamino, Dialkylamino, Aminocarbonyl, Phenyl, Phenoxy oder Phenylaminocarbonyl, wobei die Phenylgruppe in den drei letztgenannten Resten z.B. durch C₁-C₄-Alkyl, C₁-C₄-Alkoxy oder Phenoxy substituiert sein kann. Ausserdem können die Alkylreste durch kationische Reste substituiert sein, wie z.B. Trialkylammonium- oder Pyridiniumreste. In Frage kommen z.B. Trimethylammonium, Triethylammonium, Trihydroxyethylammonium, Pyridinium oder 3-Alkylpyridinium.

Geeignete Reste dieser Art sind z.B.: Hydroxyethyl, 2-Hydroxypropyl-1, 1-Hydroxy-isopropyl, 2-Hydroxy-isopropyl, 2,3-Dihydroxypropyl-1, Methoxyethyl, Ethoxymethyl, Methoxycarbonyloxyethyl, Chlorethyl, Cyanethyl, Benzyl, 1-Phenylethyl, 2-Phenylethyl, Dimethylaminoethyl, Diethylaminoethyl, Hydroxyethylaminoethyl, Dihydroxyethylaminoethyl, Methoxycarbonylethyl oder Aminocarbonylethyl.

Geeignete durch kationische Gruppen substituierte Alkylreste sind z.B.

Trimethylammoniumethyl, Triethylammoniumethyl, Trihydroxyethylammoniumethyl, Trihydroxyethylammoniumpropyl, Pyridiniumethyl, 4-Methylpyridiniumethyl, 2-Hydroxy-trimethylammoniumpropyl, Trimethylammoniummethylcarbonylaminoethyl, Dimethyl-hydroxyethylammoniumethyl, Tri-(2-hydroxypropyl)-am moniumethyl, Dimethyl-2-hydroxypropylammoniumethyl, Dimethyl-2-cyanethylammoniumethyl, Dimethyl-2-chlorethylammoniumethyl, Dimethyl-2-methoxyethylammoniumiethyl, Methyl-dihydroxyethylammoniumethyl, Methyl-di-2-hydroxyproylammoniumethyl, N-methylmorpholiniumethyl und N-methylpiperidiniumethyl.

Bei Cycloalkyl handelt es sich vor allem um Cyclopentyl und Cyclohexyl; als Substituent kommen vor allem C₁-C₄-Alkyl, insbesondere CH₃, in Frage.

Geeignete Alkoxyreste sind vorzugsweise solche mit 1 bis 4 C-Atomen, z.B. Methoxy, Ethoxy, Propoxy, iso-Propoxy, n-Butoxy, iso-Butoxy oder tert.-Butoxy. Diese Alkoxyreste können substutiert sein, z.B. durch die als Substituenten der Alkylgruppen aufgeführten Reste, insbesondere durch Hydroxy oder C₁-C₄-Alkoxy. Als substituierte Alkoxyreste kommen z.B. Hydroxyethoxy, Methoxyethoxy, 2-Hydroxypropoxy, 1,2-Dihydroxypropoxy-3 oder 1,2-Dimethoxypropoxy-3 in Frage.

Unter Halogen ist Fluor, Brom, Jod oder vor allem Chlor zu verstehen.

Unter Arylresten sind in dieser Anmeldung generell aromatische oder heteroaromatische Reste, insbesondere jedoch Naphthyl- oder vor allem Phenylreste zu verstehen. Alle diese Reste können unsubstituiert oder substituiert sein. Als Substituenten kommen z.B. C₁-C₄-Alkyl, C₁-C₄-Alkoxy, Brom, Chlor, Nitro, Cyan, Carboxy oder C₁-C₄-Alkylcarbonylamino in Betracht. Die besonders bevorzugte Bedeutung von Aryl ist jedoch Phenyl.

In den erfindungsgemässen Farbstoffen bedeutet W vorzugsweise Chlor, Brom. C₁-C₄-Alkyl, C₁-C₄-Alkoxy, Acetylamino, Benzoylamino oder Phenylureido.

Als Anion An^{⊖} kommen bei den Resten der Formel (1) oder (2) sowohl anorganische wie organische Anionen in Frage; beispielsweise sind genannt: Halogenid-, wie Chlorid-, Bromid- oder Jodid-, Sulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Falls die erfindungsgemässen Farbstoffe weitere kationische Gruppen tragen, so enthalten sie als zusätzliche Anionen vorzugsweise ebenfalls die vorstehend aufgeführten Anionen.

R bedeutet vor allem unsubstituiertes C₁-C₄-Alkyl oder C₁-C₄-Alkyl, das durch Hydroxy, oder Phenyl substituiert ist, oder Aminocarbonylethyl.

Die bevorzugte Bedeutung von X ist Wasserstoff, C₁-C₄-Alkyl oder C₁-C₄-Alkoxy, vor allem Wasserstoff.

Y bedeutet vor allem Wasserstoff, C₁-C₄-Alkyl, C₁-C₄-Alkoxy oder C₁-C₄-Alkylcarbonylamino. Besonders bevorzugte Bedeutungen von Y sind Wasserstoff, Methyl, Methoxy und Acetylamino.

Bei den Resten Z der Formeln (3) oder (5) bedeutet R₁ insbesondere Wasserstoff oder C₁-C₄-Alkyl, das unsubstituiert oder durch Hydroxy oder C₁-C₄-Alkoxy substituiert ist. Vor allem bedeutet R₁ Wasserstoff oder C₁-C₄-Alkyl, insbesondere Methyl.

Q₁ bedeutet vor allem C₁-C₁₂-Alkyl oder -Alkylen, das unsubstituiert oder durch Hydroxy oder C₁-C₄-Alkoxy substituiert ist, Cyclohexyl oder C₁-C₁₂-Alkyl oder -Alkylen, das unsubstituiert oder durch Hydroxy oder C₁-C₄-Alkoxy substituiert ist und dessen Alkylkette ein- bis dreimal durch 0, S, N-R₁, NR₁-CO, Cyclohexyl oder Phenyl unterbrochen ist. In besonders bevorzugten Farbstoffen der Formel (1) bedeutet Q₁ unsubstituiertes oder durch Hydroxy substituiertes C₁-C₄-Alkyl oder -Alkylen oder durch Hydroxy oder C₁-C₄-Alkoxy substituiertes C₁-C₉-Alkyl oder -Alkylen, dessen Alkylkette ein- his dreimal durch O, N-R₁, NR₁-CO, Cyclohexyl oder Phenyl unterbrochen ist.

Q₂ bedeutet vorzugsweise unsubstituiertes oder durch Hydroxy substituiertes C₁-C₄-Alkyl oder -Alkylen oder durch Hydroxy oder C₁-C₄-Alkoxy substituiertes C₁-C₉-Alkyl oder -Alkylen, dessen Alkylkette ein- bis dreimal durch O, N-R₁, NR₁-CO, Cyclohexyl, Phenyl, 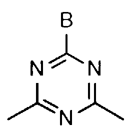 oder 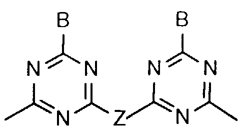 unterbrochen ist, wobei B vorzugsweise Chlor, Amino, Phenyl,Phenylamino, C₁-C₆-Alkylamino oder Di-C₁-C₄-Alkylamino bedeutet. Die Alkylaminogruppen sind dabei im Alkylteil vorzugsweise unsubstituiert oder durch Hydroxy, C₁-C₄-Alkoxy, Amino, Di-C₁-C4-Alkylamino oder Tri-C₁-C₄-Alkylammonium substituiert.

Bevorzugte erfindungsgemässe Farbstoffe entsprechen der Formel (1).

Ganz besonders bevorzugte erfindungsgemässe Farbstoffe entsprechen der Formel 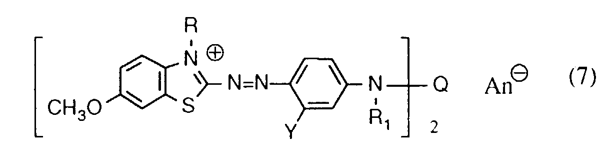 oder 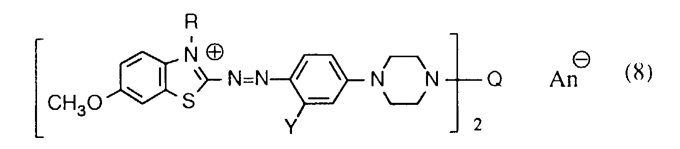 worin
R unsubstituiertes C₁-C₄-Alkyl oder C₁-C₄-Alkyl, das durch Hydroxy oder Phenyl substituiert ist, oder Aminocarbonylethyl,
Y Wasserstoff, C₁-C₄-Alkyl, C₁-C₄-Alkoxy oder C₁-C₄-Alkylcarbonylamino, vor allem Wasserstoff, Methyl, Methoxy und Acetylamino, und
Q unsubstituiertes oder durch Hydroxy substituiertes C₁-C₄-Alkyl oder -Alkylen oder durch Hydroxy oder C₁-C₄-Alkoxy substituiertes C₁-C₉-Alkyl oder -Alkylen, dessen Alkylkette ein- his dreimal durch 0, N-R₁, NR₁-CO, Cyclohexyl oder Phenyl unterbrochen ist, und
An^{⊖} ein farbloses Anion bedeutet.

Die erfindungsgemässen Farbstoffe der Formel (1) oder (2) werden z.B. erhalten, indem man eine Verbindung der Formel 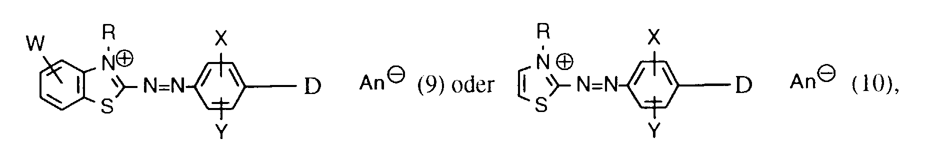 worin W, R, X, Y, und An^{⊖} die unter den Formeln (1) oder (2) angegebenen Bedeutungen aufweisen und D Alkoxy oder Halogen bedeuten, mit einem Di-, Tri- oder Tetraamin der Formel 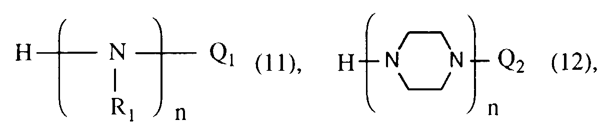 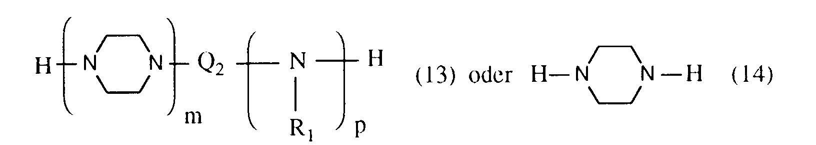 umsetzt.

Die Verbindungen der Formeln (9) bis (14) sind bekannt oder können auf an sich bekannte Art und Weise dargestellt werden.

Die Umsetzung der Verbindung der Formel (9) oder (10) mit einem Amin der Formel (11) bis (14) erfolgt ebenfalls unter an und für sich bekannten Bedingungen, beispielsweise in einem organischen Lösungsmittel bei einer Temperatur zwischen Raumtemperatur und Siedepunkt des Lösungsmittels. Je nach Art des Amins kann auch auf das Lösungsmittel verzichtet werden.

Die erfindungsgemässen Farbstoffe der Formel (1) oder (2) eignen sich insbesondere zum Färben von Papier, da sie eine hohe Substantivität für dieses Substrat aufweisen. Man erhält Färbungen in blauen oder violetten Farbtönen, die sich durch gute Echtheiten auszeichnen. Farbstoffe mit kationischen Ladungen sind ausserdem besonders geeignet zum Färben von holzhaltigem Papier (Holzschliff). Die Abwässer sind in den meisten Fällen völlig farblos.

Die Farbstoffe der Formel (1) oder (2) können als feste oder flüssige Handelsform formuliert und zum Färben von Papier eingesetzt werden.

Als Pulver oder Granulat werden die Farbstoffe insbesondere bei der diskontinuierlichen Massefärbung verwendet, wobei der Farbstoff chargenweise im Pulper, Holländer oder in der Mischbütte zugesetzt wird. Dabei werden die Farbstoffe vorzugsweise als Farbstoff-zubereitungen verwendet, die Coupagemittel, z.B. Harnstoff als Lösungsvermittler, Dextrine, Glaubersalz, Kochsalz sowie Dispergatoren, Entstäubungsmittel und Sequestriermittel, wie Tetranatriumpyrophosphat, enthalten können.

Ein weiterer Gegenstand der Erfindung sind somit feste Farbstoffzubereitungen zum Färben von Papier, welche Farbstoffe der Formel (1) oder (2) enthalten.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer zu geben oder an irgendeinem anderen geeigneten Punkt der Papierherstellung zuzufügen.

Ein weiterer Gegenstand der Erfindung sind daher konzentrierte wässrige Lösungen von Farbstoffen der Formel (1) oder (2), welche dadurch gekennzeichnet sind, dass sie mindestens 5, beispielsweise 8 bis 30 Gewichtsprozent Farbstoff, bezogen auf das Gesamtgewicht der Lösung, enthalten.

Konzentrierte wässrige Lösungen von Farbstoffen der Formel (1) oder (2) können z.B. hergestellt werden, indem man die bei der Herstellung des Farbstoffes anfallende Farbstoffsuspension filtriert, gegebenenfalls entsalzt, z.B. durch ein Membrantrennverfahren und durch Zusatz von Hilflsmitteln, wie Harnstoff, ε-Caprolactam oder Polyethylenglykol stabilisiert. Derartige Farbstofflösungen eignen sich zum Färben einer Papierpulpe in Anwesenheit von Kollophonium und Alaunschlichte.

Die so hergestellten Farbstofflösungen enthalten vorzugsweise auf 100 Teile Farbstoff 400 bis 900 Teile Wasser, 0 bis 200 Teile weitere Zusätze wie Harnstoff, ε-Caprolactam oder Polyethylenglykol sowie 0 bis 400 Teile einer organischen Carbonsäure, z.B. Ameisensäure, Essigsäure, Propionsäure oder Milchsäure.

Die erfindungsgemässen wässrigen Konzentrate, die bei Lagerungstemperaturen bis zu -5°C stabil sind, eignen sich zum Färben von Papier, auf welchem sie mit oder ohne Verwendung einer Schlichte attraktive blaue oder violette Farbtöne ergeben.

Die Farbstoffe der Formel (1) können ausserdem auch zum Färben von Textilmaterialien aus Cellulose, z.B. Baumwolle, sowie zum Färben von Leder und Glasfasern eingesetzt werden.

In den nachfolgenden Beispielen beziehen sich Teile und Prozente auf das Gewicht und die Temperaturen sind in Celsiusgraden angegeben.

### Beispiel 1:

36 Teile 2-Amino-6-methoxybenzthiazol werden in bekannter Weise in Schwefelsäure/Nitrosylschwefelsäure diazotiert und durch Zugabe von 24 Teilen 3-Methylanilin und Eis gekuppelt. Der Monoazofarbstoff wird mit Natronlauge teilneutralisiert, filtriert, mit Wasser gewaschen und getrocknet. Man erhält 54 Teile Monoazofarbstoff.

32 Teile davon werden in 120 Teilen 100 %iger Essigsäure mit 55 Teilen Dimethylsulfat und 4,5 Teilen Magnesiumoxid bei 55° C während 4 Stunden quaterniert. Die Suspension wird auf eine Mischung von 250 Teilen 10 %iger NaCl-Lösung und 200 Teilen Eis gegossen und 2 Stunden bei Raumtemperatur verrührt. Der pH-Wert wird mit Natronlauge auf 4,5 gestellt, der Farbstoff abfiltriert, mit 10 %iger NaCl-Lösung gewaschen und getrocknet. Man erhält 35 Teile des Farbstoffes der Formel 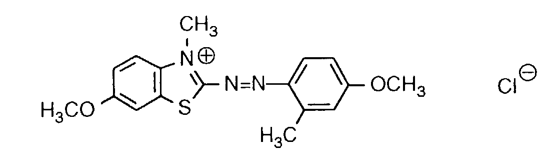 mit einem Reingehalt von 80 %.

Zu einer Lösung von 23 Teilen dieses Farbstoffes in 100 Teilen Methanol werden 2,2 Teile N,N'-Dimethylethylendiamin zugetropft. Die Suspension wird während 1 Stunde bei 25 - 30° C verrührt. Der Farbstoff wird durch Zugabe von 200 Teilen tert.-Butylmethylether vollständig ausgefällt, abgenutscht und getrocknet. Man erhält 21,5 Teile des Farbstoffes der Formel

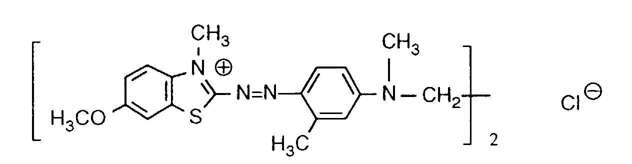

Er färbt Papier in brillanten rotstichigen Blautönen und besitzt für alle Arten von Papier ein ausgezeichnetes Ziehvermögen. Die Färbeabwässer sind farblos.

### Beispiele 2 bis 58:

Auf analoge Art wie im Beispiel 1 beschrieben werden die folgenden Farbstoffe hergestellt. Sie färben Papier in den in der letzten Spalte der Tabelle aufgeführten Farbtönen (v = violett; b = blau) mit guten Echtheiten.

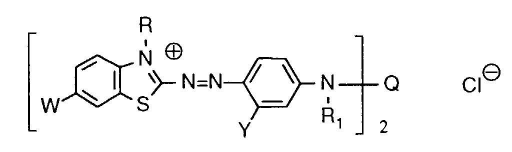

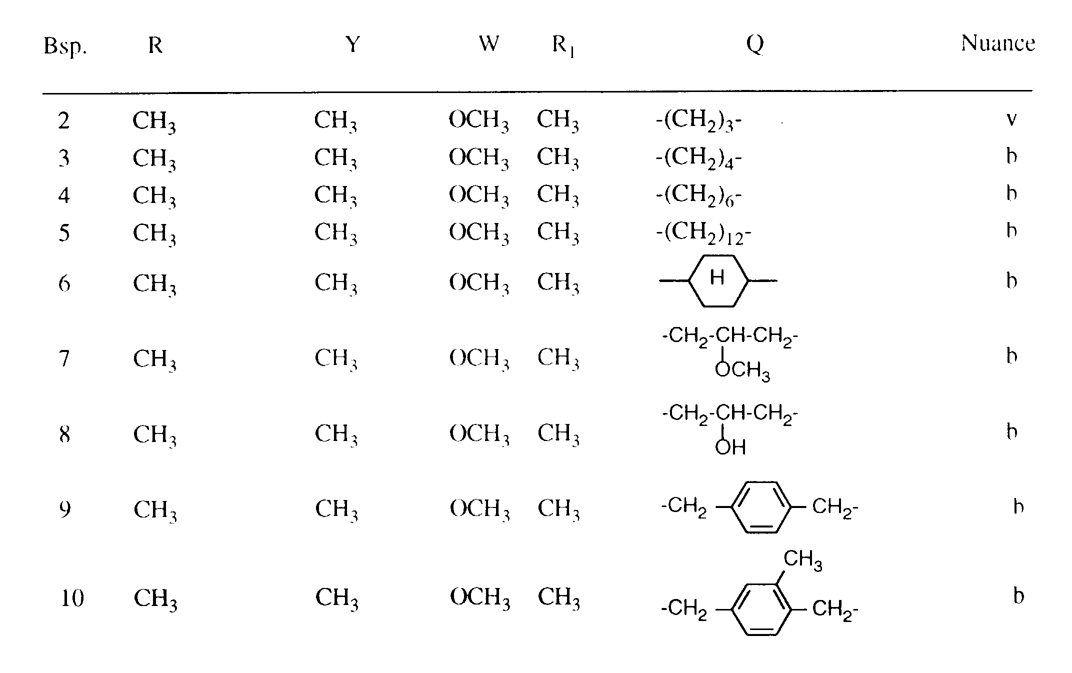

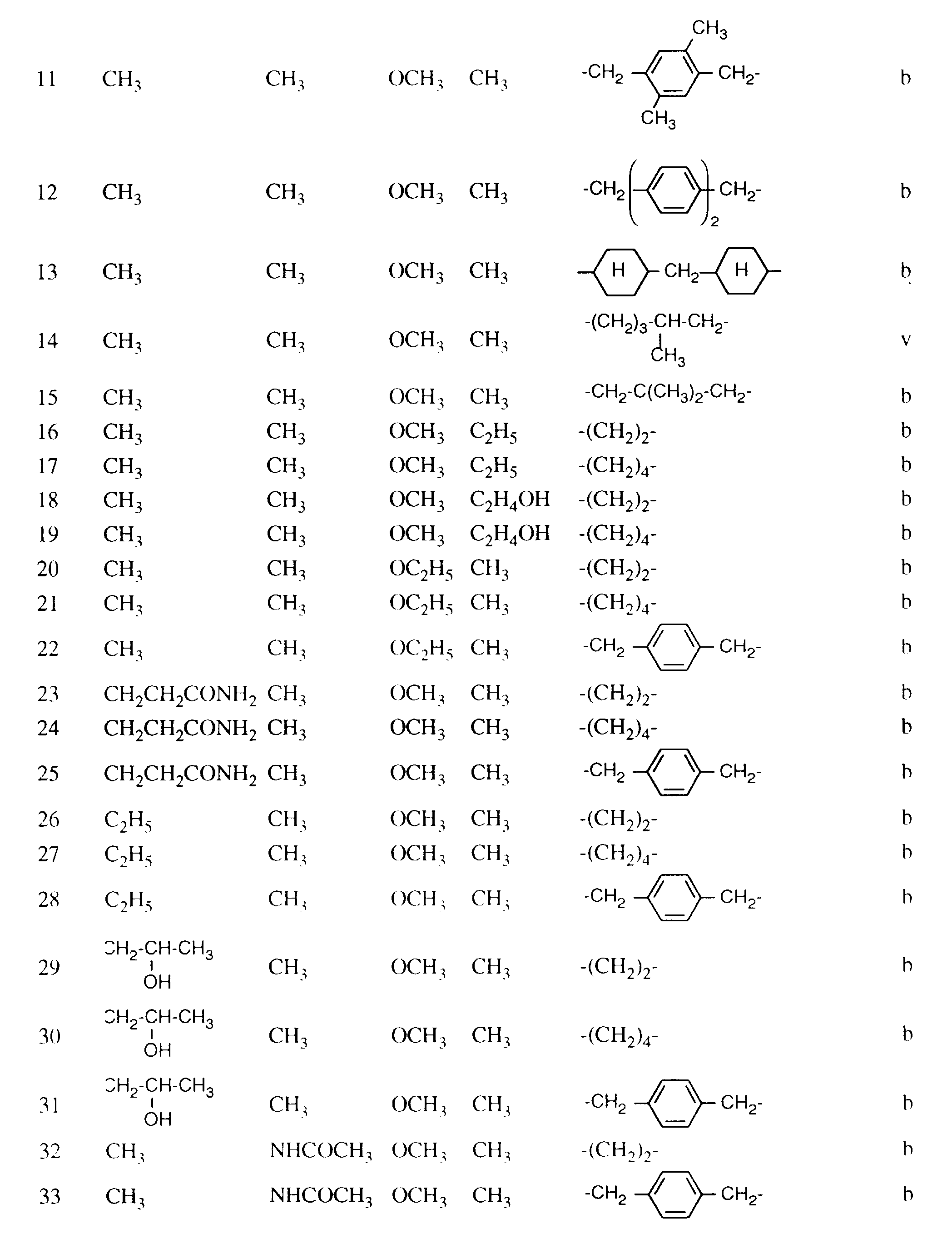

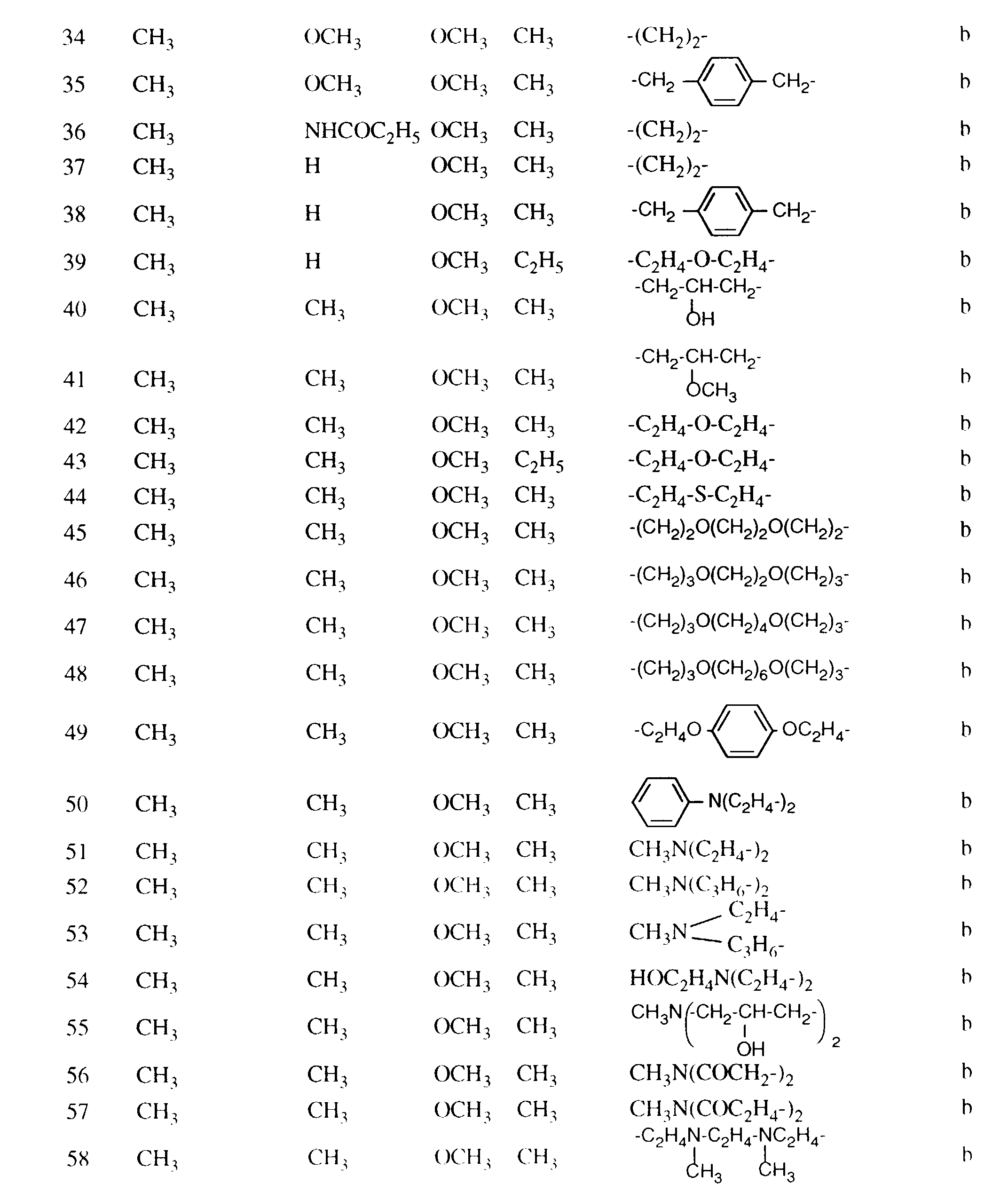

### Beispiele 59 bis 96:

Auf analoge Art wie im Beispiel 1 beschrieben werden die folgenden Farbstoffe hergestellt. Sie färben Papier in den in der letzten Spalte der Tabelle aufgeführten Farbtönen (v = violett; b = blau) mit guten Echtheiten.

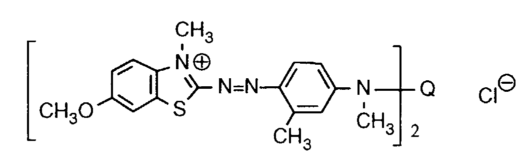

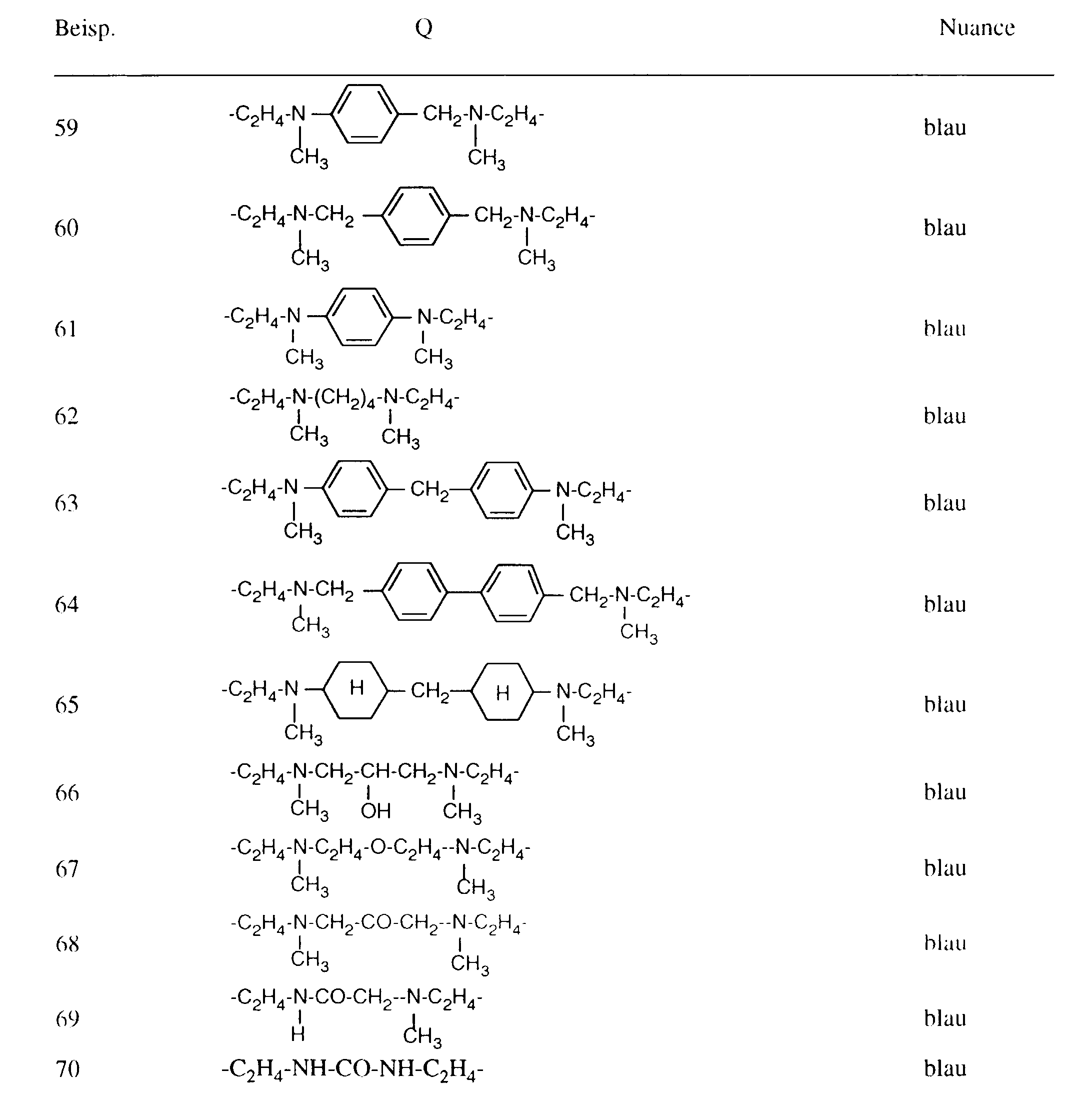

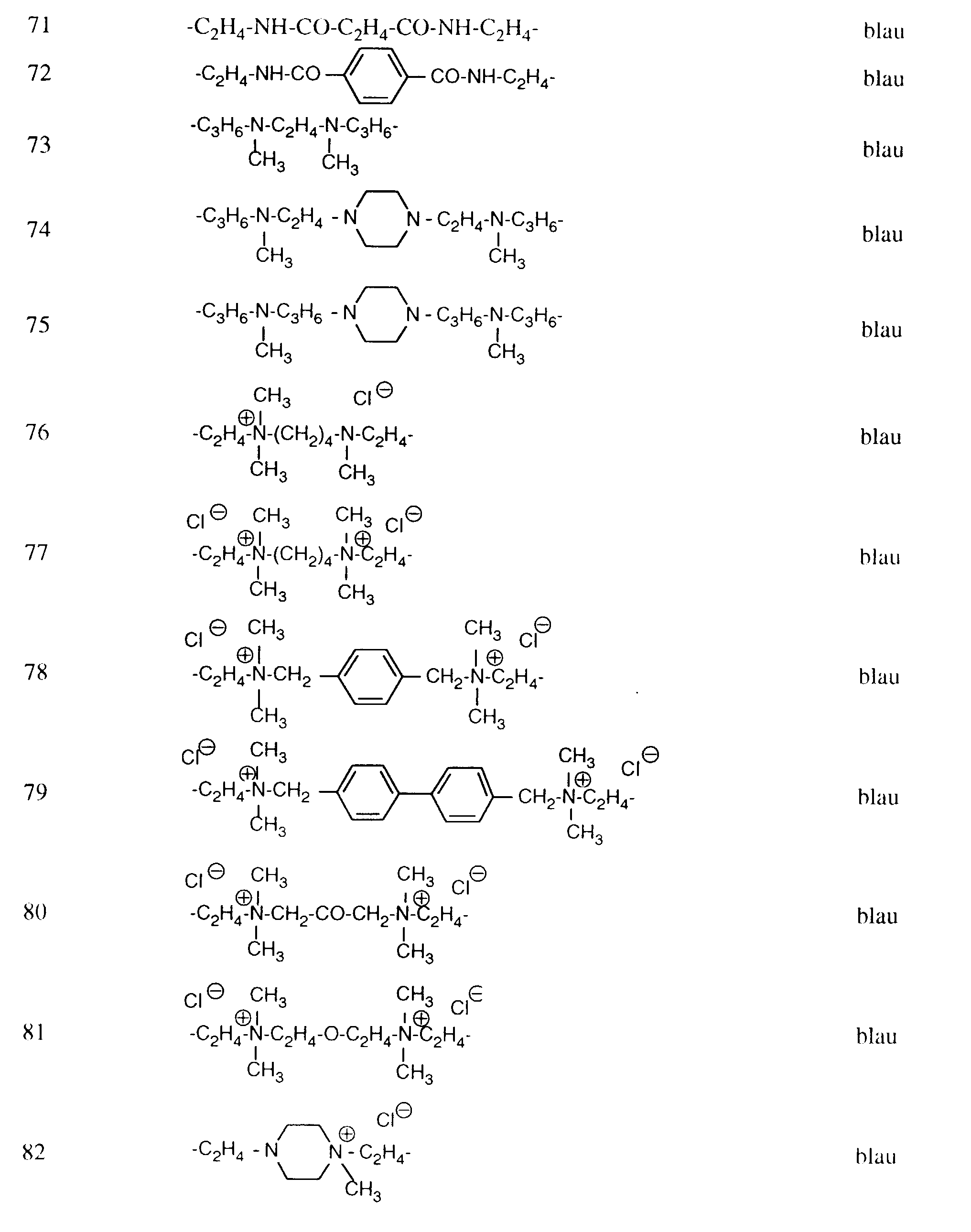

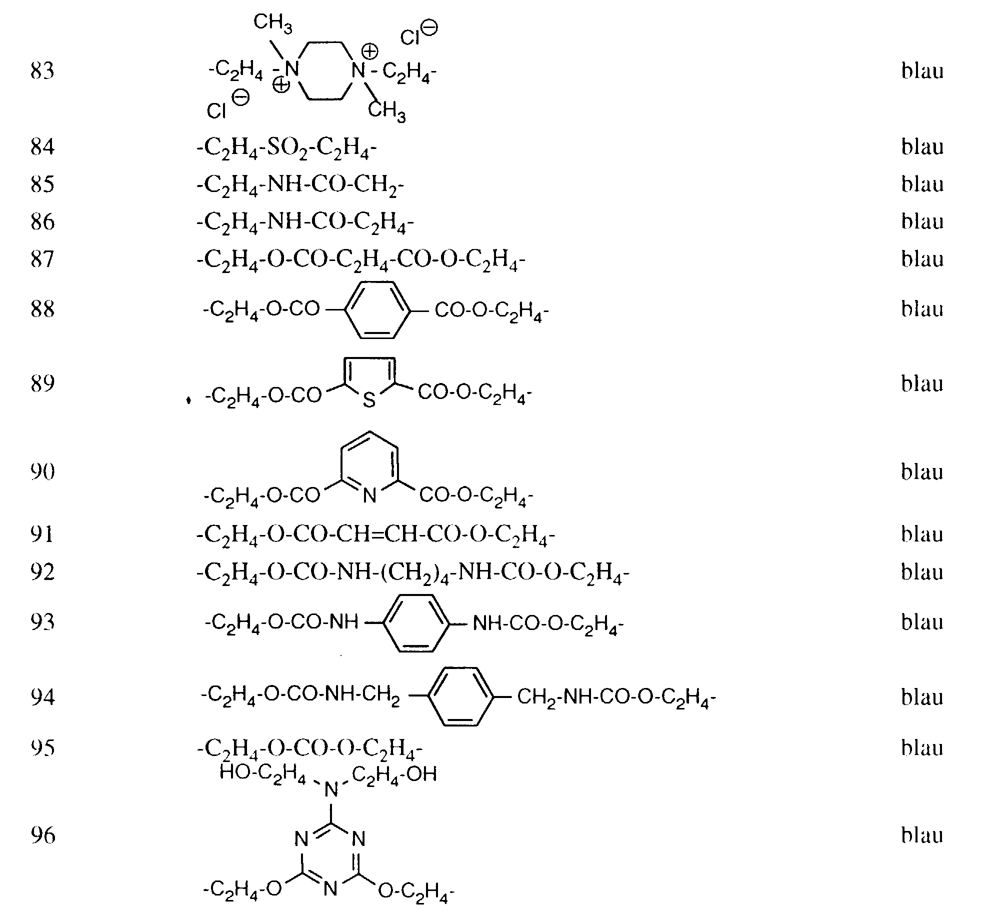

### Beispiele 97 bis 113:

Auf analoge Art wie im Beispiel 1 beschrieben werden die folgenden Farbstoffe hergestellt, Sie färben Papier in den in der letzten Spalte der Tabelle aufgeführten Farbtönen (v = violett; b = blau) mit guten Echtheiten.

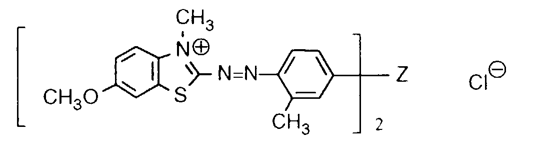

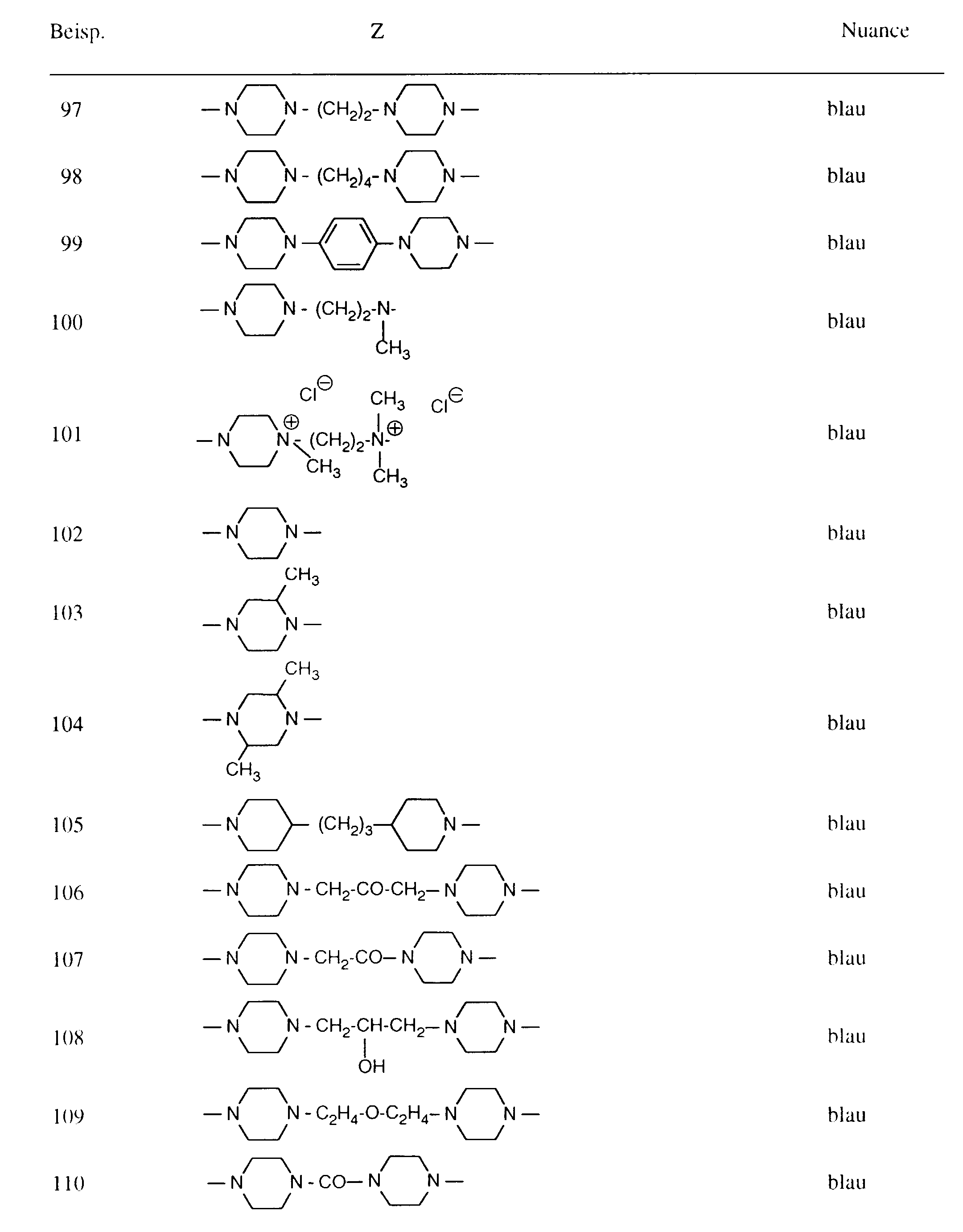

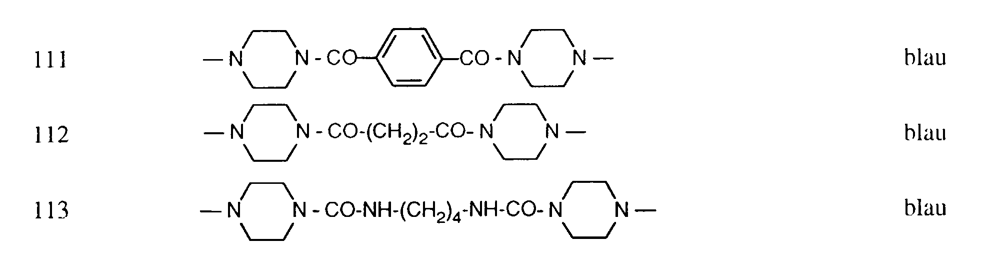

### Beispiele 114 bis 126:

Auf analoge Art wie im Beispiel 1 beschrieben werden die folgenden Farbstoffe hergestellt. Sie färben Papier in den in der letzten Spalte der Tabelle aufgeführten Farbtönen (v = violett; b = blau) mit guten Echtheiten.

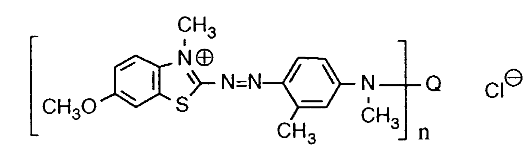

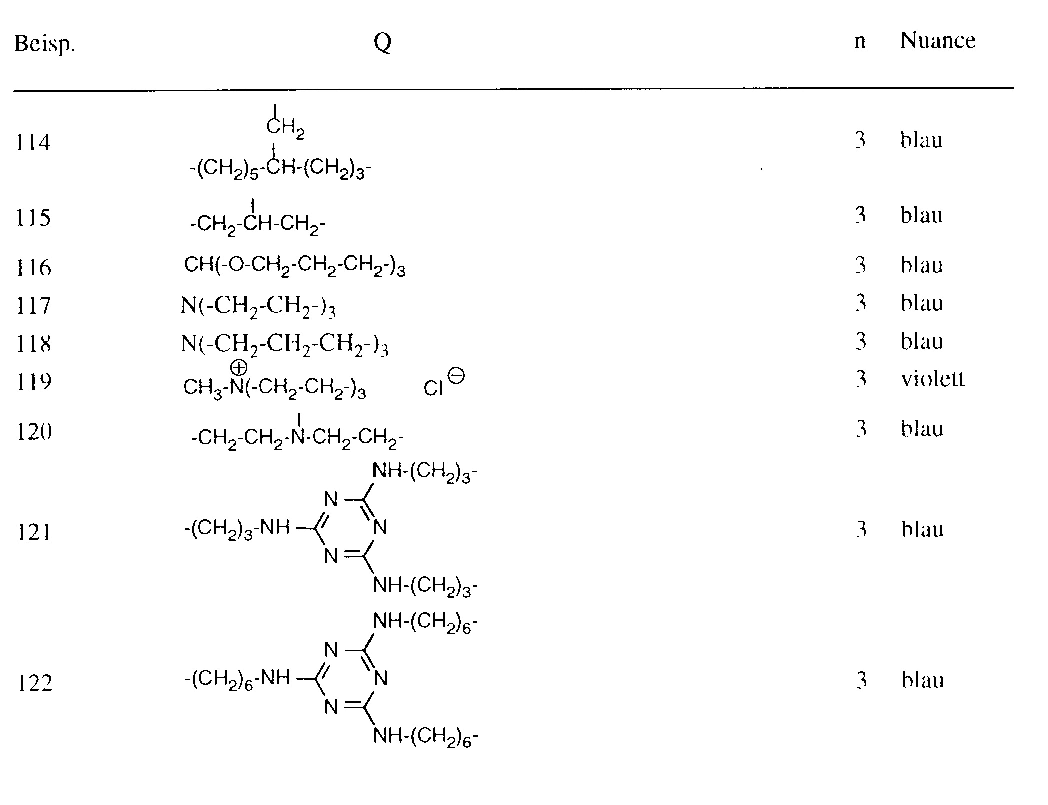

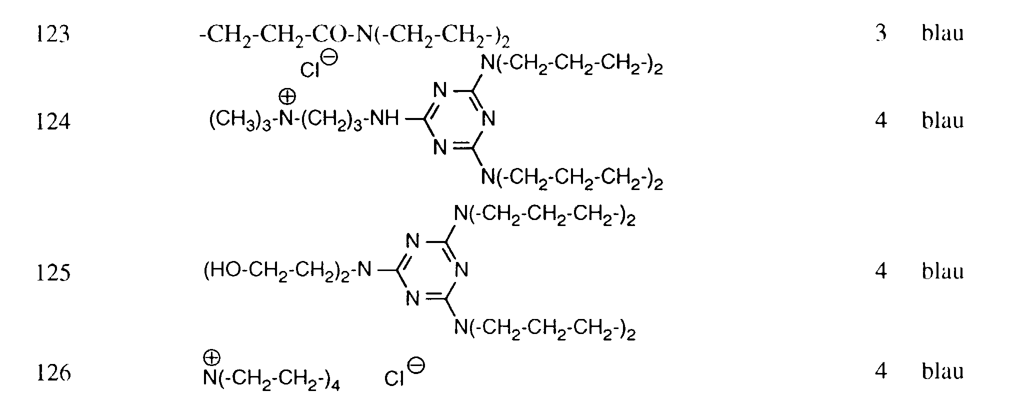

### Beispiele 127 bis 134:

Auf analoge Art wie im Beispiel 1 beschrieben werden die folgenden Farbstoffe hergestellt. Sie färben Papier in den in der letzten Spalte der Tabelle aufgeführten Farbtönen mit guten Echtheiten.

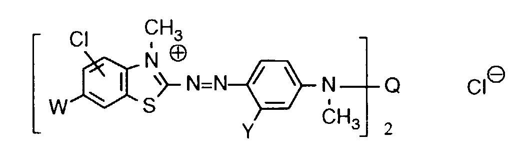

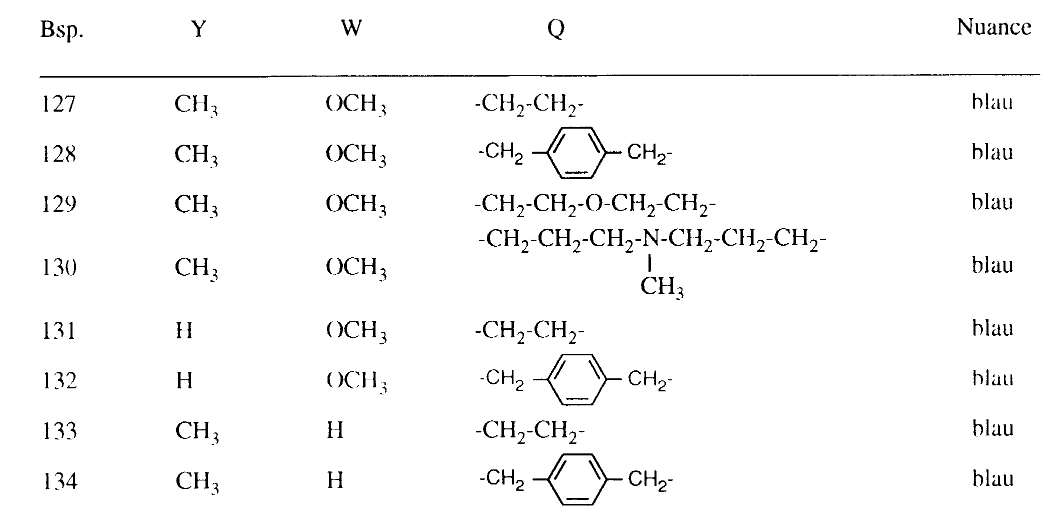

### Beispiel 135:

18,4 Teile Cyanurchlorid werden bei Raumtemperatur in 150 Teilen Aceton gelöst.

Bei einer Temperatur zwischen 0 und 5 °C werden innerhalb von 30 Minuten 37 Teile 1-(3-Methylphenyl)-piperazin zugetropft. Die Suspension wird 1 Stunde bei einer Temperatur zwischen 0 und 5 °C und danach 1 Stunde bei Raumtemperatur gerührt. Zur Beendigung der Kondensation wird innerhalb von 30 Minuten der pH-Wert durch Zugabe von 50 %iger Natronlauge auf ca. 7 angehoben und eine weitere Stunde bei Raumtemperatur gerührt. Die Suspension wird abfiltriert und der Rückstand mit wenig Aceton gewaschen und getrocknet. Man erhält 34,6 Teile eines farblosen Pulvers der Formel

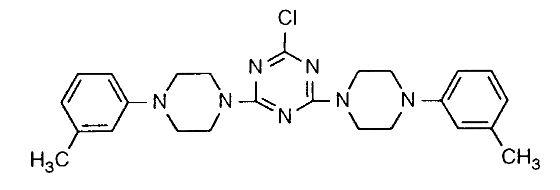

Von dieser Verbindung werden 13,9 Teile in 50 Teilen N,N-Dimethylaminopropylamin während 1 Stunde bei 90 °C verrührt, danach auf Raumtemperatur abgekühlt und auf 250 Teile Wasser gegossen. Die erhaltene Suspension wird filtriert, der Rückstand mit Wasser neutral gewaschen und getrocknet. Man erhält 12,8 Teile der Verbindung der Formel

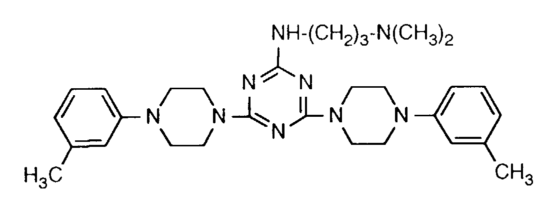

### Beispiel 136:

21,8 Teile der Verbindung der Formel 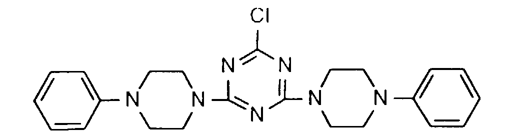 welche gemäss Beispiel 135 hergestellt wurde, werden in 100 Teilen Xylol mit 2,3 Teilen Piperazin und 10 Teilen Soda 5 Stunden unter Rückfluss erhitzt. Die abgekühlte Lösung wird filtriert und eingeengt. Man erhält 21 Teile Rückstand der folgenden Struktur:

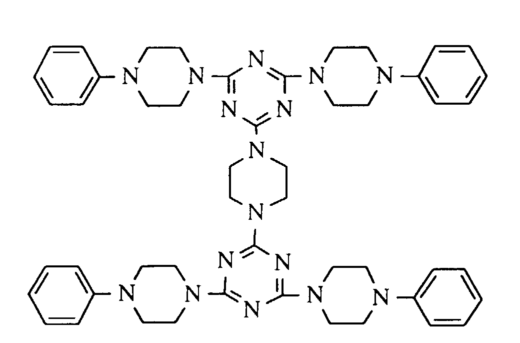

### Beispiel 137:

3,6 Teile 2-Amino-6-methoxybenzthiazol werden in bekannter Weise in Schwefelsäure/Nitrosylschwefelsäure diazotiert. 5,5 Teile des in Beispiel 135 beschriebenen Produktes werden in 25 Teilen 2 N Schwefelsäure vorgelegt und innerhalb von 30 Minuten mit der Diazo-Lösung versetzt. Es wird 1 Stunde bei 0 bis 5° C verrührt und anschliessend durch Zugabe von 50 %iger Natronlauge der pH-Wert auf ca. 2 angehoben.Die Temperatur wird mit Eis bei 0 bis 5° C gehalten. Nach beendeter Kupplung wird die Lösung mit Natronlauge neutralisiert, mit wenig Wasser verdünnt und filtriert. Der Rückstand wird mit Wasser gewaschen und getrocknet. Man erhält 8 Teile eines roten Pulvers mit folgender Struktur:

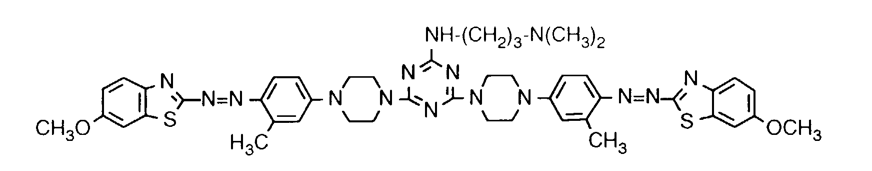

### Beispiel 138:

4,4 Teile der im Beispiel 137 beschriebenen Verbindung werden in 40 Teilen 100 %iger Essigsäure in Gegenwart von 0,6 Teilen MgO unter Zugabe von 3 Teilen Dimethylsulfat bei 75° C während 4 Stunden verrührt. Man gibt dann bei der gleichen Temperatur 10 Teile Wasser zu und rührt 1 Stunde nach. Der Farbstoff wird zur Trockne eingeengt, in 30 Teilen Wasser aufgenommen und durch Zugabe von NaCl ausgefällt. Der Rückstand wird abfiltriert und getrocknet. Man erhält 3,5 Teile des Farbstoffes der Formel

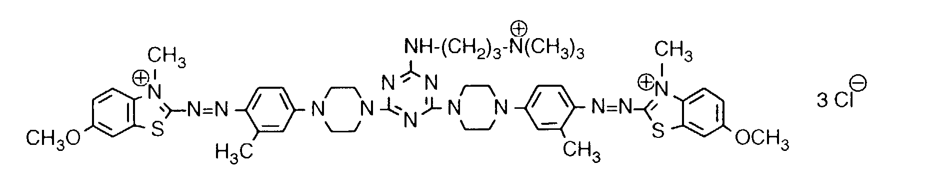

Dieser färbt Zellstoff und Holzschliff ohne Abwasserbelastung in blauen Tönen und liefert Färbungen mit guter Nassechtheit.

### Beispiele 139 - 172:

Auf analoge Art wie in den Beispielen 137 und 138 beschrieben werden die folgenden Farbstoffe hergestellt. Sie färben Papier in blauen Farbtönen mit guten Echtheiten.

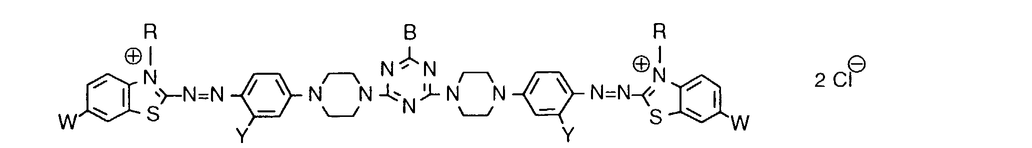

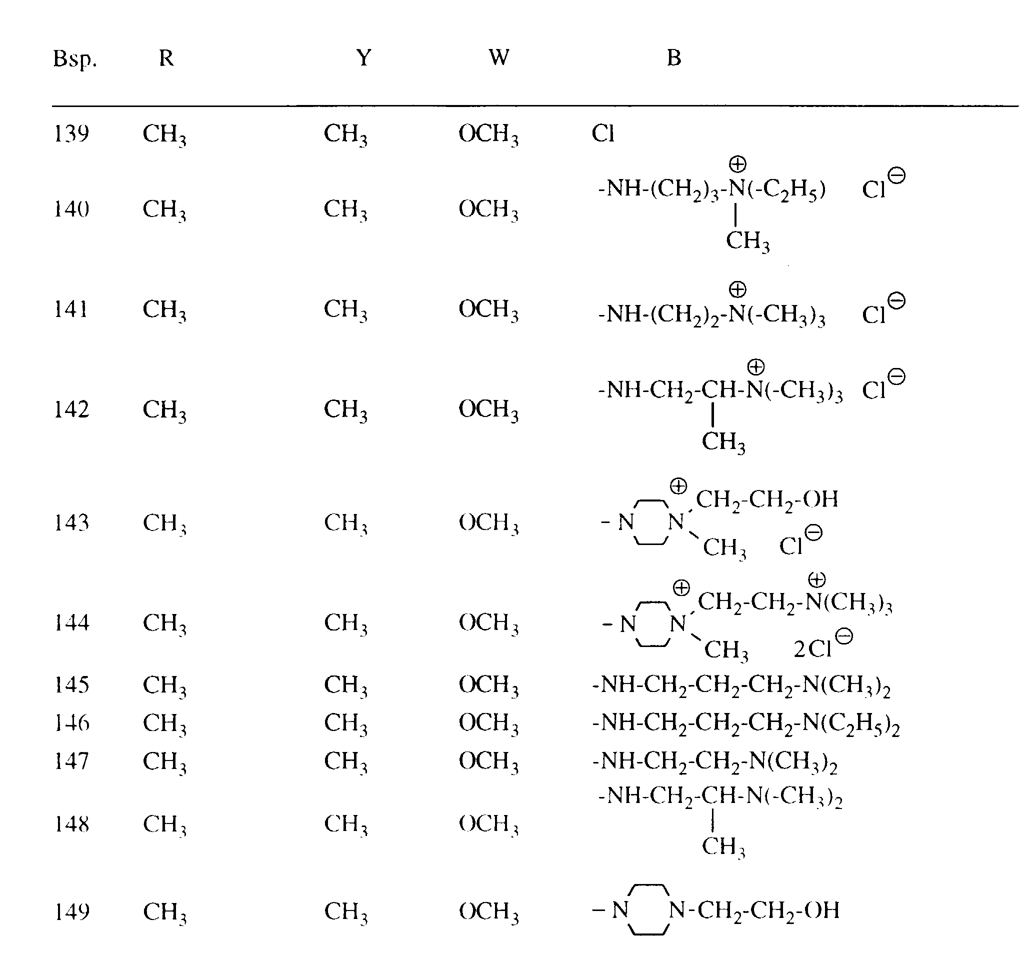

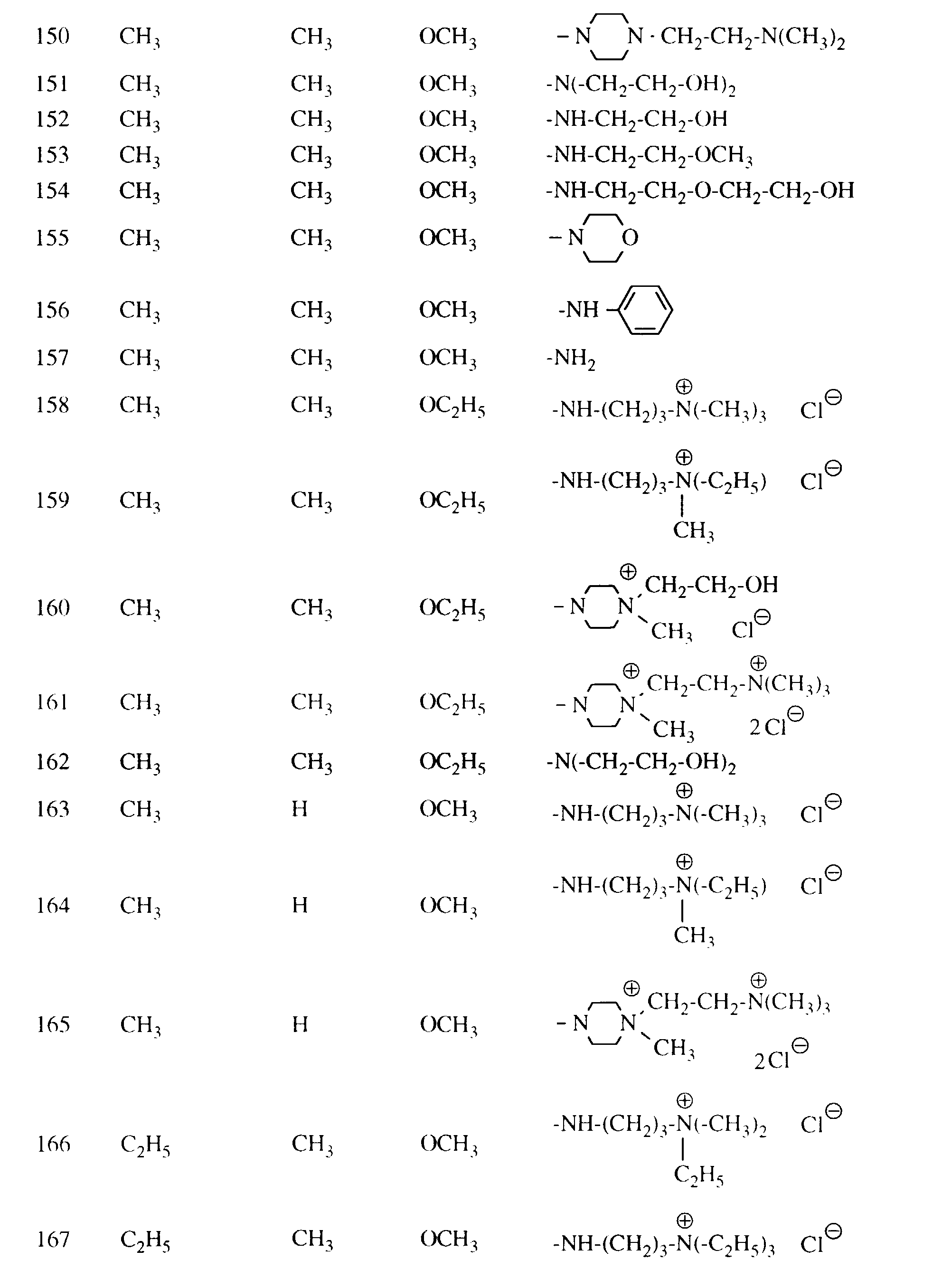

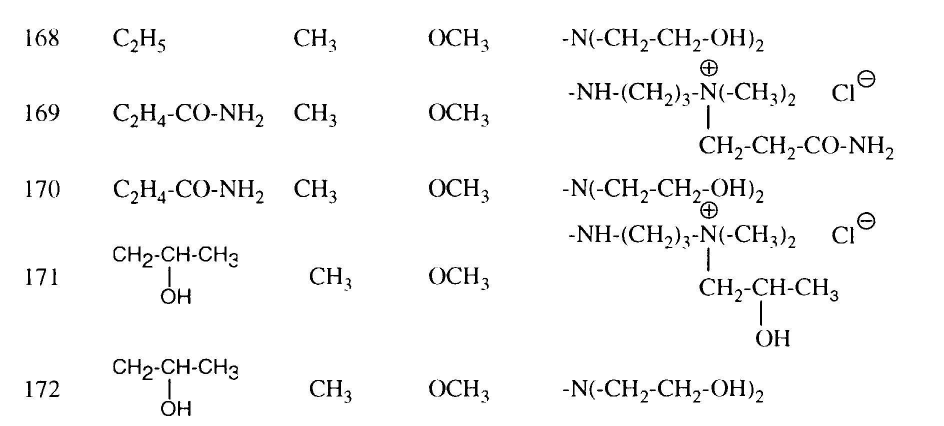

### Beispiele 173 - 182:

Auf analoge Art wie in den Beispielen 137 und 138 beschrieben werden die folgenden Farbstoffe hergestellt. Sie färben Papier in blauen Farbtönen mit guten Echtheiten.

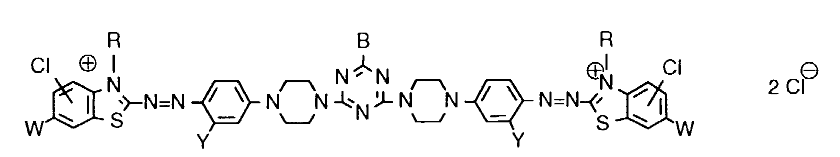

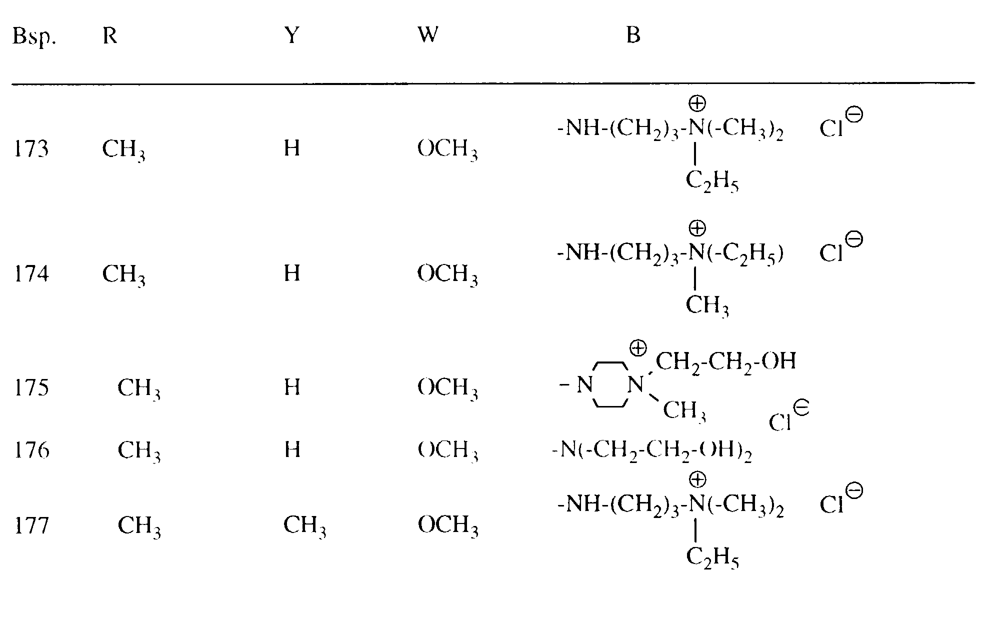

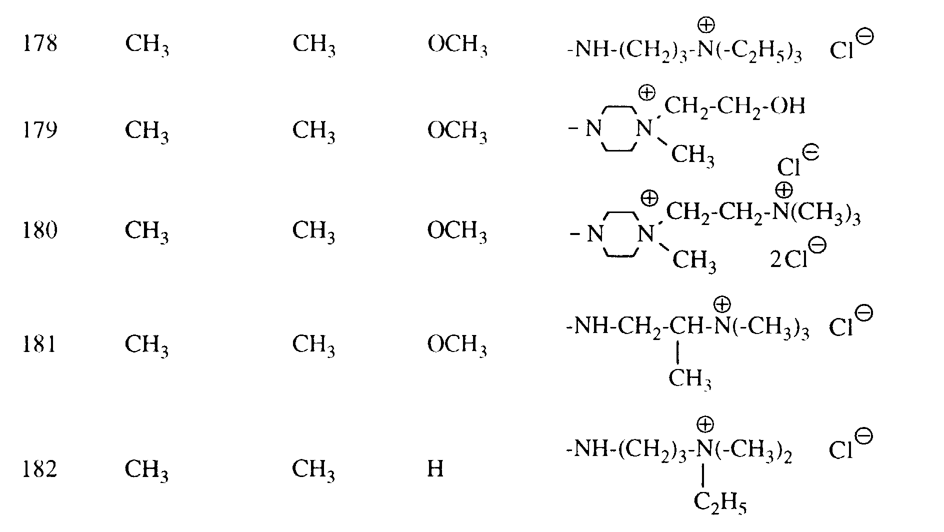

### Beispiele 183 - 192:

Auf analoge Art wie in den Beispielen 136 bis 138 beschrieben werden die folgenden Farbstoffe hergestellt. Sie färben Papier in blauen Farbtönen mit guten Echtheiten.

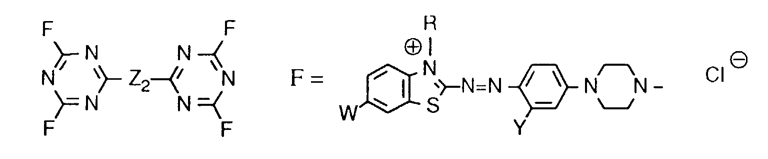

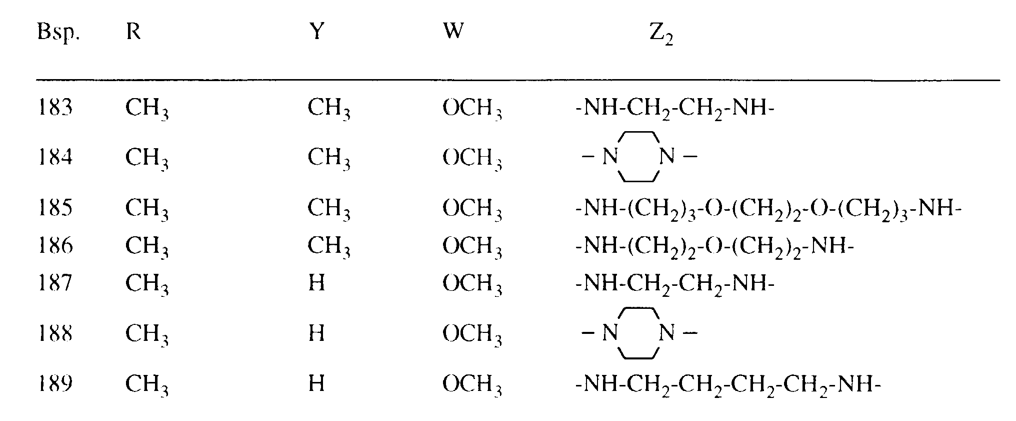

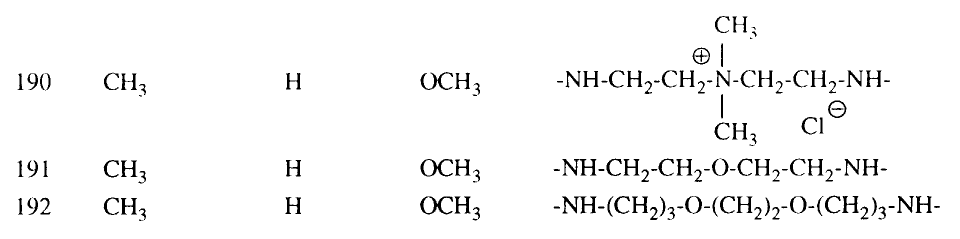

### Beispiele 193 - 213:

Auf analoge Art wie in den Beispielen 136 bis 138 beschrieben werden die folgenden Farbstoffe hergestellt. Sie färben Papier in rotstichig blauen Farbtönen mit guten Echtheiten.

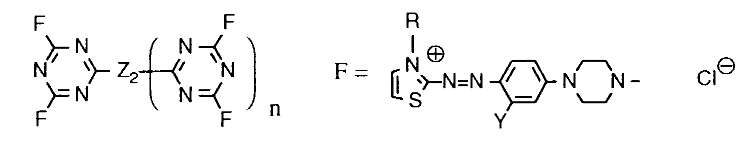

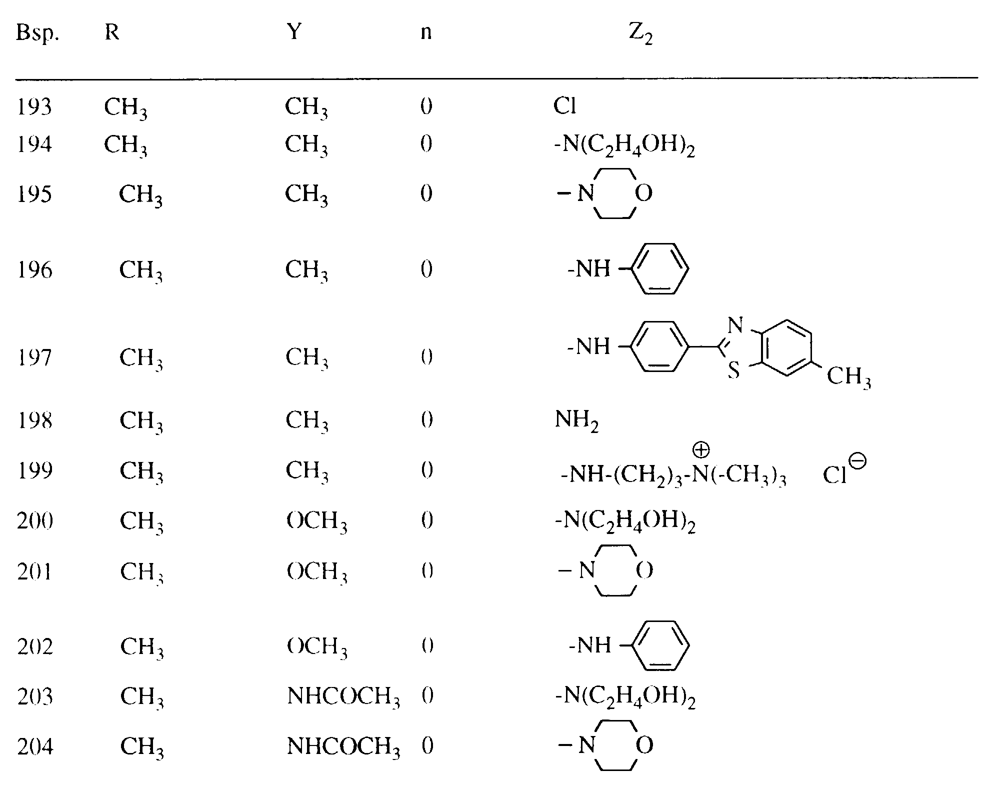

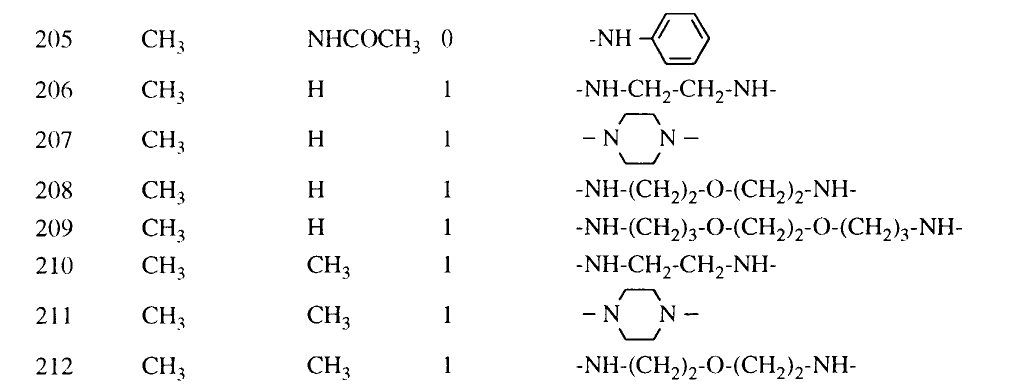

### Beispiel 213:

Man vermischt 50 Teile chemisch gebleichte Buche-Sulfitzellulose mit 50 Teilen gebleichter Fichtezellulose RKN 15 (Mahlgrad 22° SR) und 2 Teilen des Farbstoffes gemäss Beispiel 1 in Wasser (pH 6, Wasserhärte 10° dH, Temperatur 20°, Flottenverhältnis 1:40). Nach 15 minütigem Rühren werden Papierblätter auf einem Frank-Blattbildner hergestellt.

Das Papier ist intensiv rotstichig blau gefärbt. Das Abwasser ist völlig farblos. Der Ausziehgrad erreicht praktisch 100 %. Die Nassechtheiten sind ausgezeichnet.

### Beispiel 214:

Es wird eine Papierbahn aus gebleichter Buche-Sulfitzellulose (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert (0,5 %ige Färbung, Flottenverhältnis 1:400, Wasserhärte 10° dH, pH 6, Temperatur 20°).

Es entsteht auf der Papierbahn eine blaue Färbung von mittlerer Intensität. Das Abwasser ist völlig farblos.

### Beispiel 215:

Analog zu den Angaben im Beispiel 210 werden 100 Teile Holzschliff mit 2 Teilen des Farbstoffes aus Beispiel 97 gefärbt. Man erhält eine blaue Färbung mit guten Echtheiten. Das Abwasser ist völlig farblos.

### Beispiele 216 bis 227:

Auf analoge Art wie im Beispiel 1 beschrieben werden die folgenden Farbstoffe hergestellt. Sie färben Papier in blauen Farbtönen mit guten Echtheiten.

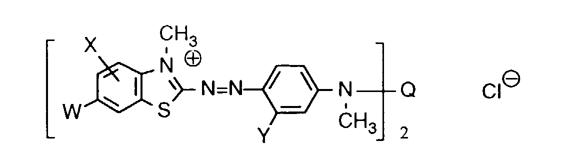

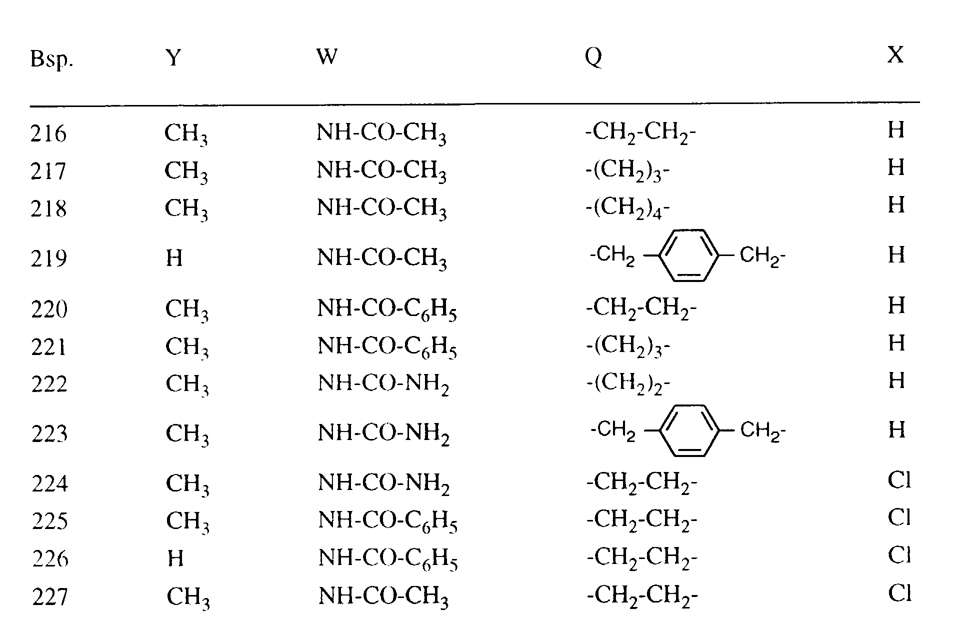

### Beispiele 228 - 242:

Auf analoge Art wie im Beispiel 137 beschrieben werden die folgenden Farbstoffe hergestellt. Sie färben Papier in blauen Farbtönen mit guten Echtheiten.

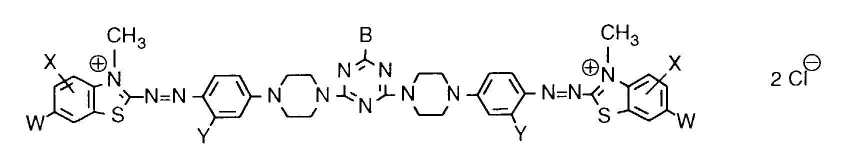

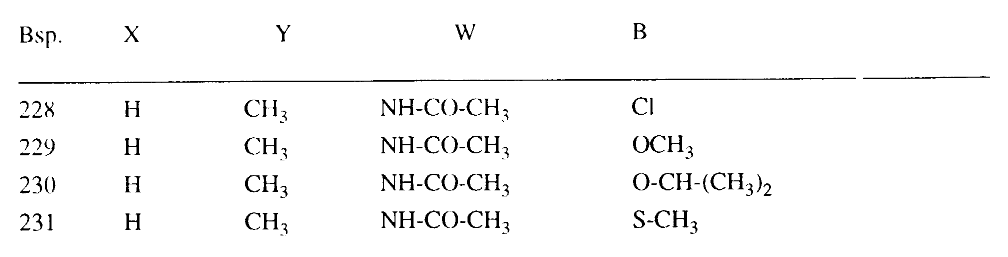

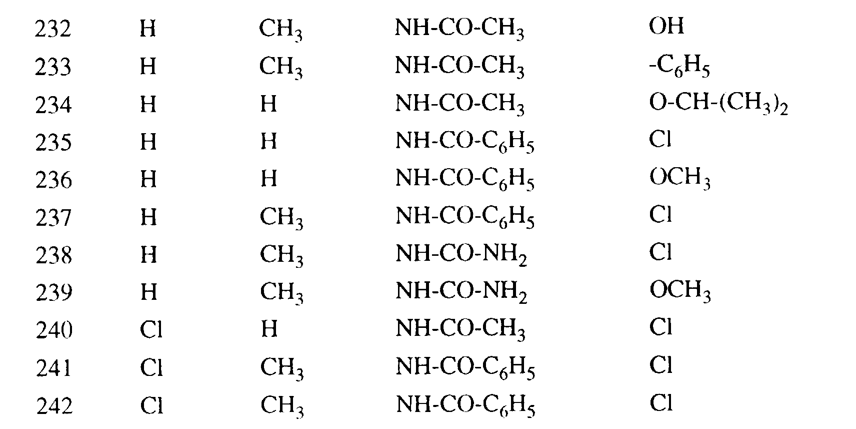

### Beispiele 243 - 251:

Auf analoge Art wie in den Beispielen 136 bis 138 beschrieben werden die folgenden Farbstoffe hergestellt. Sie färben Papier in blauen Farbtönen mit guten Echtheiten.

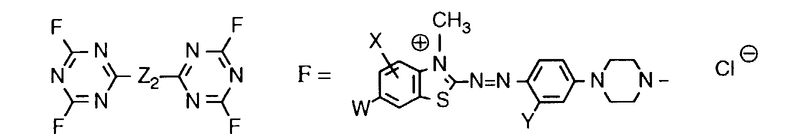

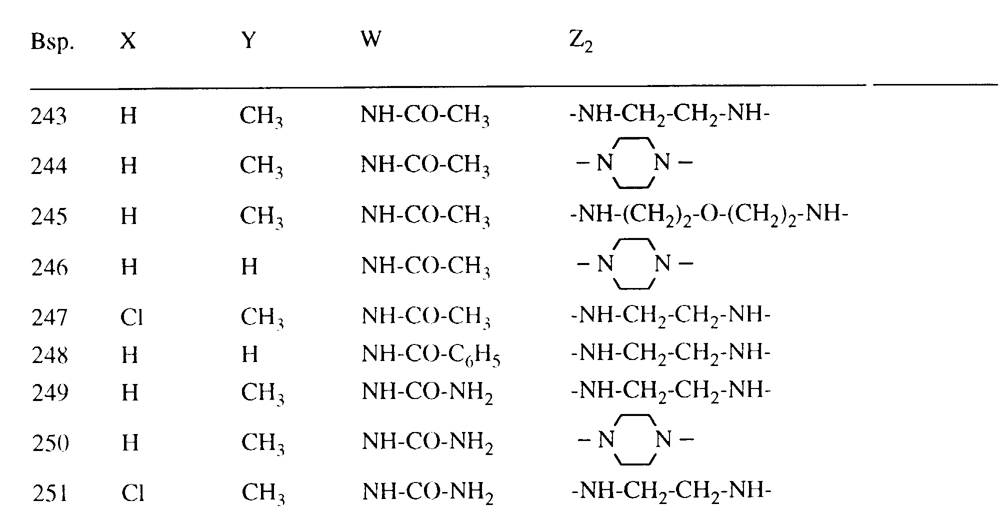

### Beispiele 252 bis 263:

Auf analoge Art wie im Beispiel 1 beschrieben werden die folgenden Farbstoffe hergestellt. Sie färben Papier in rotstichig blauen Farbtönen mit guten Echtheiten.

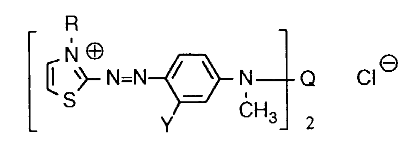

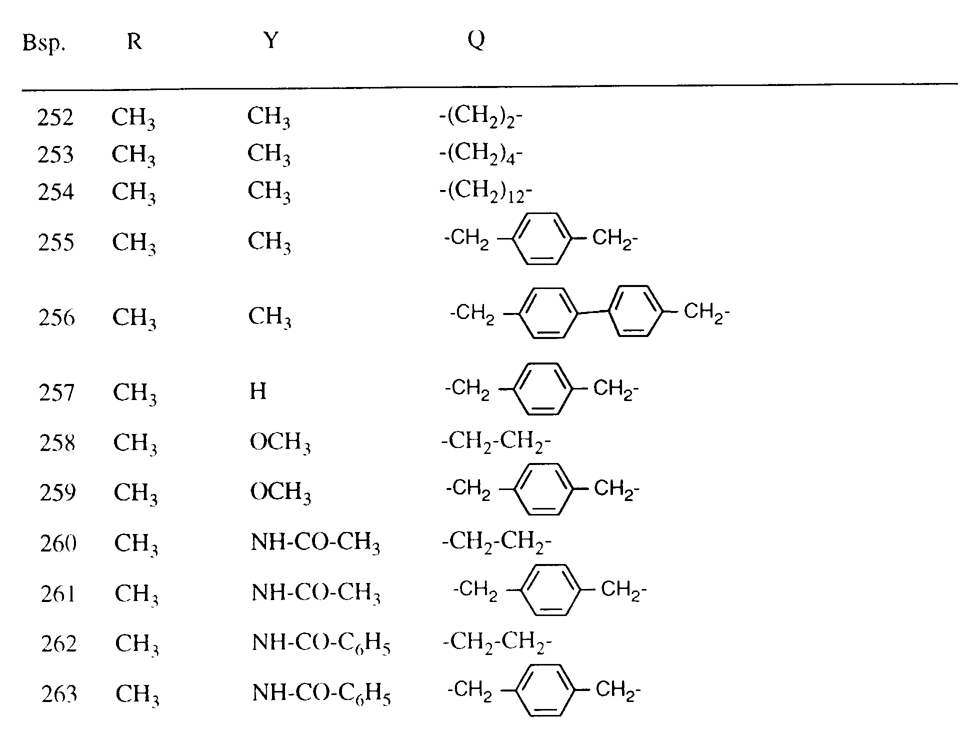

### Beispiele 264 - 267:

Auf analoge Art wie in den Beispielen 136 bis 138 beschrieben werden die folgenden Farbstoffe hergestellt. Sie färben Papier in rotstichig blauen Farbtönen mit guten Echtheiten.

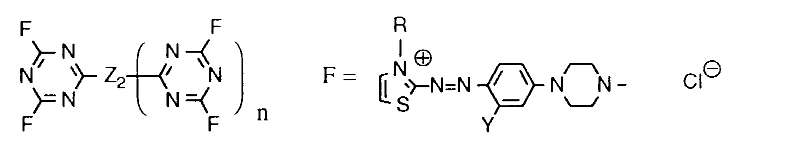

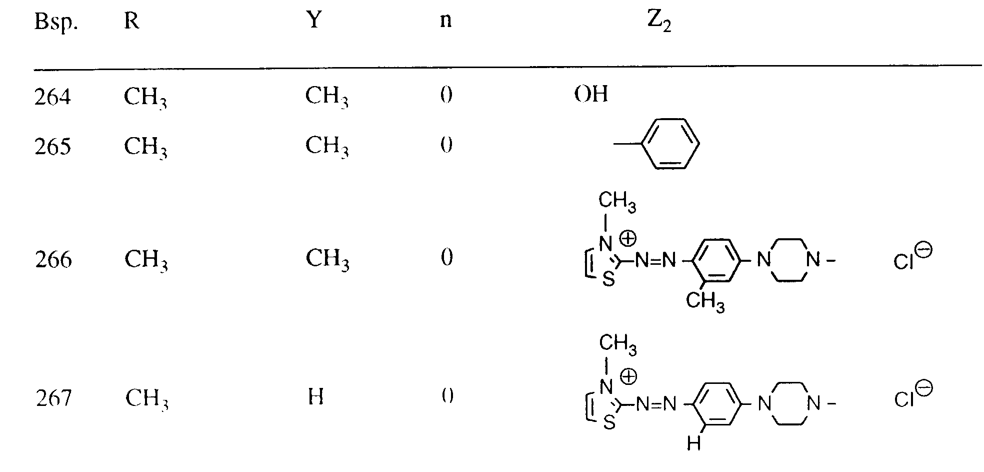

## Patentansprüche

1. Verbindungen der Formel 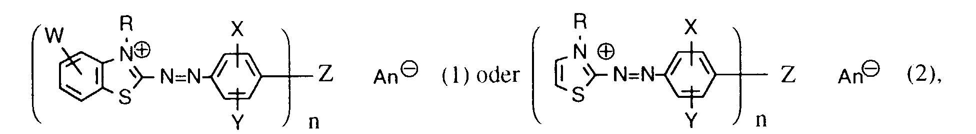 worin
W Halogen, Alkyl, Alkoxy, Carboxy, Alkanoylamino, Arylamino, Arylcarbonylamino Ureido, Alkylureido oder Arylureido,
R Alkyl,
X Wasserstoff, Alkyl oder Alkoxy,
Y Wasserstoff, Alkyl, Alkoxy, Alkanoylamino, Arylcarbonylamino oder Arylureido,
n 2, 3 oder 4,
An^{⊖} ein farbloses Anion und
Z den Rest eines aliphatischen Di-, Tri- oder Tetraamins der Formel 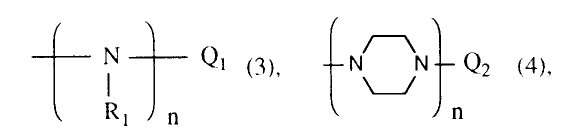 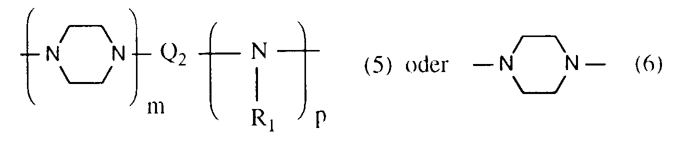
bedeutet, wobei
m und p unabhängig voneinander je 1 oder 2,
R₁ ggf. substituiertes Alkyl oder Phenyl,
Q₁ Alkyl oder Alkylen, das ein- oder mehrmals durch O, S, N-R₁, NR₁-CO, CO-NR₁-CO, CO, SO₂, -CH=CH-, O-CO, Aryl oder durch einen heterocyclischen Ring mit 1 oder 2 Heteroatomen unterbrochen sein kann, und
Q₂ Alkyl oder Alkylen, das ein- oder mehrmals durch O, S, N-R₁, NR₁-CO, CO-NR₁-CO, CO, SO₂, -CH=CH-, O-CO, Aryl oder durch einen heterocyclischen Ring unterbrochen sein kann, oder ein Brückenglied der Formel CO, CO-Alkylen-CO, CO-Arylen-CO, CO-NH-Alkylen-NH-CO, CO-NH-Arylen-NH-CO, 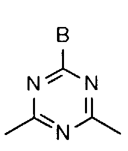 oder 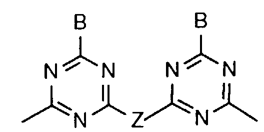 bedeutet, wobei B Halogen, gegebenenfalls substituiertes Amino, Hydroxy, Mercapto oder Phenyl ist.

2. Farbstoffe gemäss Anspruch 1, dadurch gekennzeichnet, dass R unsubstituiertes C₁-C₄-Alkyl oder C₁-C₄-Alkyl, das durch Hydroxy oder Phenyl substituiert ist, oder Aminocarbonylethyl bedeutet.

3. Farbstoffe gemäss einem der Ansprüche 1 oder 2, dadurch gekennzeichnet, dass X Wasserstoff, C₁-C₄-Alkyl oder C₁-C₄-Alkoxy bedeutet.

4. Farbstoffe gemäss Anspruch 3, dadurch gekennzeichnet, dass X Wasserstoff ist.

5. Farbstoffe gemäss einem der Ansprüche 1 bis 4, dadurch gekennzeichnet, dass Y Wasserstoff, C₁-C₄-Alkyl, C₁-C₄-Alkoxy oder C₁-C₄-Alkylcarbonylamino bedeutet.

6. Farbstoffe gemäss Anspruch 5, dadurch gekennzeichnet, dass Y Wasserstoff, Methyl, Methoxy oder Acetylamino bedeutet.

7. Farbstoffe gemäss einem der Ansprüche 1 bis 6, dadurch gekennzeichnet, dass R₁ Wasserstoff oder C₁-C₄-Alkyl das unsubstituiert oder durch Hydroxy oder C₁-C₄-Alkoxy substituiert ist, bedeutet.

8. Farbstoffe gemäss Anspruch 7, dadurch gekennzeichnet, dass R₁ Wasserstoff oder C₁-C₄-Alkyl bedeutet.

9. Farbstoffe gemäss einem der Ansprüche 1 bis 8. dadurch gekennzeichnet, dass Z eine Gruppe der Formel (2) bedeutet, worin Q₁ C₁-C₁₂-Alkyl oder -Alkylen, das unsubstituiert oder durch Hydroxy oder C₁-C₄-Alkoxy substituiert ist, Cyclohexyl oder C₁-C₁₂-Alkyl oder -Alkylen, das unsubstituiert oder durch Hydroxy oder C1-C₄-Alkoxy substituiert ist und dessen Alkylkette ein- bis dreimal durch O, S, N-R₁, NR₁-CO, Cyclohexyl oder Phenyl unterbrochen ist, bedeutet.

10. Farbstoffe gemäss Anspruch 9, dadurch gekennzeichnet, dass Q₁ unsubstituiertes oder durch Hydroxy substituiertes C₁-C₄-Alkyl oder -Alkylen oder durch Hydroxy oder C₁-C₄-Alkoxy substituiertes C₁-C₉-Alkyl oder -Alkylen, dessen Alkylkette ein- bis dreimal durch O, N-R₁, NR₁-CO, Cyclohexyl oder Phenyl unterbrochen ist, bedeutet.

11. Farbstoffe gemäss einem der Ansprüche 1 bis 8, dadurch gekennzeichnet, dass Z eine Gruppe der Formel (3) oder (4) bedeutet, worin Q₂ unsubstituiertes oder durch Hydroxy substituiertes C₁-C₄-Alkyl oder -Alkylen oder durch Hydroxy oder C₁-C₄-Alkoxy substituiertes C₁-C₉-Alkyl oder -Alkylen ,dessen Alkylkette ein- bis dreimal durch O, N-R₁, NR₁-CO, Cyclohexyl, Phenyl. 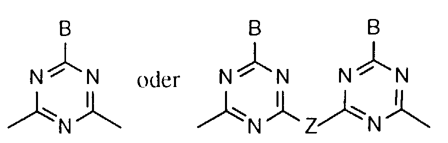 unterbrochen ist, bedeutet, wobei B Chlor, Amino, Phenyl,Phenylamino, C₁-C₆-Alkylamino oder Di-C₁-C₄-Alkylamino bedeutet.

12. Farbstoffe gemäss Anspruch 11, dadurch gekennzeichnet, dass B C₁-C₆-Alkylamino oder Di-C₁-C₄-Alkylamino bedeutet, worin die Alkylaminogruppen im Alkylteil unsubstituiert oder durch Hydroxy, C₁-C₄-Alkoxy, Amino, Di-C₁-C₄-Alkylamino oder Tri-C₁-C₄-Alkylammonium substituiert sind.

13. Farbstoffe gemäss Anspruch 1, der Formel (1).

14. Farbstoffe gemäss Anspruch 1, der Formel 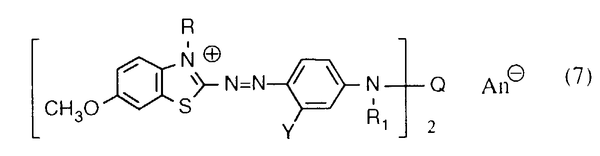 oder 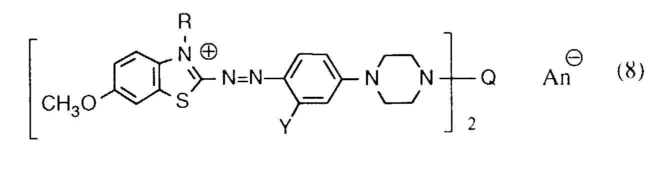 worin
R unsubstituiertes C₁-C₄-Alkyl oder C₁-C₄-Alkyl, das durch Hydroxy oder Phenyl substituiert ist, oder Aminocarbonylethyl,
Y Wasserstoff, C₁-C₄-Alkyl, C₁-C₄-Alkoxy oder C₁-C₄-Alkylcarbonylamino, vor allem Wasserstoff, Methyl, Methoxy und Acetylamino, und
Q unsubstituiertes oder durch Hydroxy substituiertes C₁-C₄-Alkyl oder -Alkylen oder durch Hydroxy oder C₁-C₄-Alkoxy substituiertes C₁-C₉-Alkyl oder -Alkylen, dessen Alkylkette ein- bis dreimal durch O, N-R₁, NR₁-CO, Cyclohexyl oder Phenyl unterbrochen ist, und
An^{⊖} ein farbloses Anion bedeutet.

15. Verfahren zur Herstellung von Farbstoffen der Formel (1) oder (2) gemäss Anspruch 1, dadurch gekennzeichnet, dass man eine Verbindung der Formel 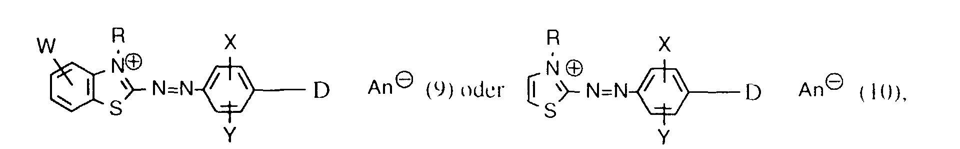 worin W, R, X, Y, und An^{⊖} die unter den Formeln (1) oder (2) angegebenen Bedeutungen aufweisen und D Alkoxy oder Halogen bedeuten, mit einem Di-, Tri- oder Tetraamin der Formel 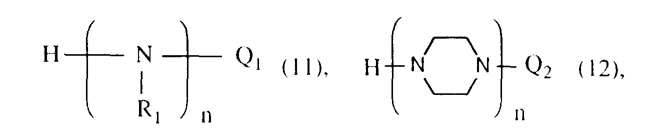 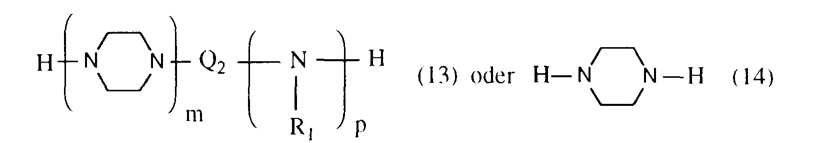 umsetzt.

16. Verfahren zum Färben von Papier, dadurch gekennzeichnet, dass man das Papier mit einem Farbstoff der Formel (1) oder (2) gemäss Anspruch 1 behandelt.

17. Das nach dem Verfahren gemäss Anspruch 16 erhaltene gefärbte Papier.

18. Feste Farbstoffzubereitungen zum Färben von Papier, dadurch gekennzeichnet, dass sie mindestens einen Farbstoff gemäss Anspruch 1 enthalten.

19. Flüssige Farbstoffzubereitungen zum Färben von Papier, dadurch gekennzeichnet, dass sie mindestens einen Farbstoff gemäss Anspruch 1 enthalten.
